(19) Europäisches Patentamt
European Patent Office
Office européen des brevets

(11) Publication number: **0 209 240**
**B1**

(12) # EUROPEAN PATENT SPECIFICATION

(45) Date of publication of patent specification: **14.03.90**

(51) Int. Cl.$^5$: **B 01 J 29/08,** B 01 J 29/06, C 10 G 11/05

(21) Application number: **86304419.4**

(22) Date of filing: **10.06.86**

(54) **A cracking catalyst containing water-insoluble strontium compounds and methods of using them.**

(30) Priority: **11.06.85 US 743593**

(43) Date of publication of application:
**21.01.87 Bulletin 87/04**

(45) Publication of the grant of the patent:
**14.03.90 Bulletin 90/11**

(84) Designated Contracting States:
**DE FR GB IT NL SE**

(56) References cited:
**US-A-4 239 615**
**US-A-4 396 496**

(73) Proprietor: **Exxon Research and Engineering Company**
**P.O.Box 390 180 Park Avenue**
**Florham Park New Jersey 07932 (US)**

(72) Inventor: **Kugler, Edwin Lee**
**RD No. 2, box 38B Lannon Lane**
**Glen Gardner New Jersey 08826 (US)**

(74) Representative: **Somers, Harold Arnold et al**
**ESSO Engineering (Europe) Ltd. Patents & Licences**
**Apex Tower High Street**
**New Malden Surrey KT3 4DJ (GB)**

**EP 0 209 240 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a catalyst suitable for use in a fluid catalytic process and a method of using the catalyst on hydrocarbons containing one or more soluble metal poisons (vanadium, nickel or iron) to convert the hydrocarbons to lower boiling fractions. The catalyst contains one or more particulate, discrete, substantially water-insoluble strontium compounds (in addition to a conventional zeolite and catalyst matrix) which react with (or trap or "get") the metal poison to preserve the structure of the zeolite and, in addition, lower the coke and hydrogen production.

One major operation in the modern refinery is the process of catalytic cracking. In this process, some of the heavier oils (often called "gas oils") produced upon fractionation of whole crude oil are decomposed or "cracked" using fluidized zeolite-containing catalysts. This process was developed during World War II to provide high octant gasoline for use in turbocharged fighter aircraft.

As the supply of light, sweet crude oils has dwindled during past years, catalytic cracking has become increasingly important in maintaining a supply of hydrocarbons suitable for use in various fuels such as gasoline. A problem that has occurred because of the increasing use of heavier, more sour crudes is that the heavier crudes contain substantially more organic metal compounds, such as vanadium and nickel porphyrins. These metals cause many undesirable reactions in heavy oil cracking catalysts in that the metals, specifically nickel and vanadium, are quite harmful to the fluidized cracking catalysts used. These metals, present in the high-boiling fractions, deposit on cracking catalyst and accumulate with time. They act as poisons and have the resulting effect of increasing undesirable hydrogen and coke yields and as well as decreasing the selectivity of the catalyst in making liquid products. Recently, vanadium has been found not only to increase hydrogen and coke yields but also to attack the zeolite itself, the high activity component of a catalytic cracking catalyst. See, *Ritter et al,* "A Look at New FCC Catalysts for Resid", Oil and Gas J., July 6, 1981, pg. 103. The mode of vanadium attack is not understood; however, available data indicate that vanadium can migrate through the catalyst particle and accumulate in areas of high zeolite concentration.

All zeolites appear to be susceptible to vanadium attack although the level of susceptibility appears to vary with the type of zeolite and its extent and type of cation exchange.

The past practice had been either to avoid charging feedstocks boiling above about 1050°F (566°C) and/or limiting total metal concentrations in the feedstocks to below about 1 ppm. As noted above, these practices are no longer viable and charging heavier feedstocks containing metals is becoming increasingly necessary.

To counteract the effect of these metals, various workers have included additives such as antimony, tin, barium, calcium, manganese and bismuth into cracking catalyst to provide some measure of protection against deactivation. These so-called passivation procedures may be seen in, e.g., U.S. Pat. Nos. 3,711,422 (antimony); 3,977,963 (bismuth or manganese); 4,101,417 (tin); 4,238,362 (antimony); 4,279,735 (antimony); 4,377,494 (barium); 4,451,355 (calcium) and 4,473,463 (barium).

Other strontium compounds have been included in cracking catalysts. For instance, strontium has been ion exchanged into the zeolite, e.g., U.S. Pat. No. 3,835,030. Soluble strontium compounds, especially SrO, have been included in fluid cracking catalysts for a variety of reasons, e.g., U.S. Pat. Nos. 4,415,480; 4,382,878; 4,093,536; Ger. Offen. DE 2,431,983. Strontium silicate has been added as a catalyst activator. Zul'fugarov *et al,* "Catalyst for cracking petroleum fractions", Inst. Inorg. and Phys. Chem., Acad. of Sci., Azerbaidzhan S.S.R., (1980).

Catalytic cracking catalysts have been treated with water-soluble, non-particulate compounds to alleviate problems associated with vanadium containing feedstocks; see, WP 8203225 or U.S. Pat. No. 4,432,890.

None of the cited prior art references suggests a catalyst containing particulate, substantially water-insoluble strontium materials as an effective method for mitigating the deleterious effects of nickel and vanadium contained in catalytic cracking feedstocks.

The invention is concerned with a catalyst suitable for catalytically cracking a hydrocarbon containing one or more of vanadium or nickel-bearing compounds into lower boiling components without substantial degeneration of the catalyst. The present invention provides a catalytic cracking catalyst comprising an aluminosilicate zeolitic material; a matrix material selected from (a) one or more material mineral clays selected from kaolin, halloysite, and montmorillonite and (b) an inorganic oxide selected from silica, alumina, silica-alumina, silica-zirconia, silica-magnesia, alumina-boria and alumina-titania; and a particulate substantially water-insoluble strontium-containing material dispersed in the matrix which forms a high melting product with a metal poison of vanadium- or nickel-containing components or mixtures when subjected to fluid catalytic cracking regenerator temperatures and which strontium-containing material is selected from strontium carbonate, strontium silicate, and strontium aluminate.

The zeolitic material may be selected from faujasite, Type Y and high silica Type Y. The zeolitic material may be at least partially exchanged with one or more of lanthanum, cerium, neodymium, or praesodymium.

In one embodiment, the catalyst comprises a zeolitic composition, a clay or refractory inorganic binder matrix and an amount of a particulate substantially water-insoluble strontium-containing material in an amount effective to prevent substantial degeneration of the included zeolite due to poisoning by the metal

poisons, the strontium-containing material being one or more of the said strontium compounds which form vanadates or other similar high melting compounds in the FCCU regenerator. The preferred strontium compound is strontium carbonate.

The invention also relates to a process for the cracking of hydrocarbons containing one or more vanadium of nickel-containing compounds to lower boilding hydrocarbons by use of the inventive cracking catalyst.

In the drawings:

Figure 1 depicts, in schematic fashion, the major portions of a typical fluidized catalytic cracking unit.

Figure 2 provides a comparison between the effectiveness of FCCU catalyst containing the inventive strontium additive and catalyst containing other alkaline earth metals.

The catalyst composition of this invention is made up of a zeolitic material, a matrix material, and a particulate, substantially water-insoluble strontium-containing material in an amount sufficient to prevent substantial degradation of the zeolite by poisoning with at least one of vanadium or nickel bearing compounds.

The zeolitic material used in catalytic cracking catalysts is generally an aluminosilicate zeolite. Zeolites are characterized as crystalline, three dimensional structures of silicon and aluminum which are linked together through shared oxygen atoms. The structure formed is microporous and usually contains uniform cavities connected by similarly uniform channels. The generalized formula may be represented as follows:

$$xM_{2/n}O: Al_2O_3: 1.5\text{—}100\ SiO_2: yH_2O$$

where M is a metal cation, n is the valence of that metal, x is between 0 and 1, and y is the number of molecules of water. M is an alkali metal, alkaline earth metal, or a lanthanide series material. Good cracking activity usually requires reduction of the alkali metal content to as low as possible; often less than 0.5 wt%. In a typical catalyst, M will be one or more of lanthanum, cerium, neodymium, or praesodymium.

The zeolite material used in this invention will be one having an effective pore size of greater than about 0.5 nm diameter usually, however, less than 1.5 nm. Naturally occurring zeolites which may be suitable include gmelinite, faujasite, cancrinite, offretite, mordenite or similar material. Suitable synthetic zeolites include X, Y, L, beta, many of the ZSM series and omega. Obviously, zeolitic materials may be aluminosilicates, *per se*, or those structures with phosphorus, gallium, or germanium introduced into the framework. The preferred materials are faujasite, Type Y and especially "ultrastable" or high silica Type Y. The zeolite material may be present in the final catalyst in an amount from 3—35 percent by weight, but preferably 3 to 25 percent by weight.

The zeolite material (usually after ion exchange to remove any alkali metal and to incorporate an appropriate cation, e.g., lanthanide ions) is incorporated in a catalyst matrix material. The matrix may include one or more of natural mineral clays such as kaolin, halloysite, or montmorillonite and one or more inorganic oxides such as amorphous inorganic oxides, e.g., silica, alumina, silica-alumina, silica-zirconia, silica-magnesia, alumina-boria, alumina-titania, and the like, and mixtures thereof. Preferably the inorganic oxide may be introduced in a gel or other suitable form. The matrix component may suitably be present in the catalyst of the present invention in an amount ranging from about 55 to about 92 weight percent, preferably from about 60 to about 80 weight percent, based on the total catalyst.

A catalytically inert material may also be present in the finished catalyst. The term "catalytically inert" refers to a material having substantially no catalytic activity or less catalytic activity than the inorganic component or the clay component of the catalyst. The inert component may be an absorptive bulk material which has been pre-formed and placed in an physical form such that its surface area and pore structure are stabilized. When added to an impure inorganic gel containing considerable amounts of residual soluble salts, the salts will not alter the surface characteristics measurably, nor will they promote chemical attack on the pre-formed inert material. Suitable inert materials for use in the catalyst of the present invention include silica, alumina, titania, zirconia, magnesia, and mixtures thereof. Mullite and other low surface area clays may also be included. Silica or alumina may be used as binders to combine the various components of the catalyst. The inert material, when used as a component of the catalyst of the present invention, may be present in the finished catalyst in an amount ranging from about 10 to about 35 weight percent based on the total catalyst.

The strontium compound is introduced into the catalyst as a discrete component found generally dispersed in the matrix and apart from the zeolitic material. Although any particulate and generally water-insoluble strontium material selected from strontium carbonate, strontium silicate and strontium aluminate, which will form a high melting, i.e., greater than about 670°C, product with vanadium or nickel or mixtures thereof in a FCCU regenerator may be used as a catalyst component, the preferred material is a carbonate. For use with vanadium containing feeds, strontium carbonate is most preferred. Although the relative amount of strontium-containing material should be substantially in excess of that needed to retain all of the poison metals included in a particular feed, any amount will provide some benefit.

A cracking catalyst particle made according to the invention would contain zeolite, matrix, possibly fillers and binders and the strontium-containing additive. The zeolitic material provides activity to crack gas oils to gasoline; the matrix often provides activity to crack molecules too large for the zeolite; and the filler and binder provide the mass and physical properties for proper fluidization and attrition resistance within

the cat-cracking unit. The strontium-containing material might replace some clay filler in a catalyst fabricated from zeolite, clay and binder. That strontium compound actively competes with the zeolite so that metal poison contacting the catalyst preferentially reacts with the strontium and therefore prevents degradation of the zeolite.

The current understanding of metals attack on cracking catalyst indicates that metal porphyrin molecules are deposited on the exterior surface of catalyst particles during cracking. Cracking takes place in the "transfer line" shown in Figure 1. The porphyrin molecules diffuse poorly and are too large to penetrate the zeolite. Consequently, they probably remain adsorbed onto the first surface of contact. This should produce an egg-shell type deposit. After cracking, the product gasoline is steam-stripped from the catalyst and the hydrocarbon residues remaining on the catalyst are burned from the catalyst in the regenerator. Metals present on the catalyst are oxidized in the regenerator.

Although metal porphyrin molecules are probably deposited on the external catalyst surface during cracking, the metallic poisons become mobile at the elevated temperatures present in the regenerator. For instance, vanadium pentoxide melts at 670°C, below most FCCU regenerator temperatures, and therefore may migrate during the catalyst burn. The vanadium may diffuse from its initial exterior position and react with the zeolite or other catalyst components. In a catalyst containing zeolite, clay and binder, the zeolite is usually the most reactive component toward the metal poison.

Damage to the zeolite would therefore be substantially lessened by including a strontium containing component which is more active than the zeolite. The strontium-compound forms high melting (and therefore immobile) compounds and prevents the metal poison compounds from migrating to the zeolite.

The catalyst of the present invention can be prepared by any one of several conventional methods. One method comprises making an inorganic oxide hydrogel and separate aqueous slurries of the zeolite component, the particulate strontium-containing material and, if desired, the catalytically inert component. The slurries can then be blended into the hydrogel, and the mixture homogenized. The resulting homogeneous mixture can be spray-dried and washed free of extraneous soluble salts using, for example, a dilute ammonium carbonate solution and water. After filtering, the resulting catalyst is calcined to reduce the volatile content to less than 12 weight percent.

Alternatively, the matrix may be a sol, aluminum chlorohydrate, or other known matrix material. The strontium containing particulate material may also be physically mixed with known catalytic cracking catalyst compositions.

The catalyst composition of this invention is employed in the cracking of nickel- or vanadium-containing charge stocks to produce gasoline and light distillate fractions from heavier hydrocarbon feedstocks. The charge stocks generally are those having an average boiling temperature above 600°F (316°C) and include materials such as gas oils, certain lighter resids, and the like.

The charge stocks employed in the process of this invention can contain significantly higher concentrations of vanadium or nickel than those employed in the conventional catalytic cracking processes, in that the catalyst of this invention is effective in cracking processes operated at vanadium contaminant levels in excess of 4,000 ppm (on the catalyst), even exceeding 30,000 ppm. Thus, the charge stocks to the catalytic cracking process of this invention can contain vanadium contaminants up to 3.5 ppm and higher with no significant reduction in effective catalyst life when compared with conventional catalytic cracking processes.

Although not to be limited thereto, a preferred method of employing the catalyst of this invention is by fluid catalytic cracking using riser outlet temperatures between about 900° and about 1100°F (482° to 593°C). Under fluid catalytic cracking conditions, the cracking occurs in the presence of a fluidized composited catalyst in an elongated reactor tube commonly referred to as a riser, see Figure 1. Generally, the riser has a length-to-diameter ratio of about 20, and the charge stock is passed through a preheater, which heats the charge stock to a temperature of at least 400°F (204°C). The heated charge stock is introduced into the bottom of the riser.

In operation, a contact time (based on feed) of up to 15 seconds and catalyst-to-oil weight ratios of between about 4:1 and about 15:1 are employed. Steam can be introduced into the oil inlet line to the riser and/or introduced independently to the bottom of the riser to assist in carrying regenerated catalyst upward through the riser.

The riser system may be operated at a pressure in the range of about 5 to about 50 psig (34.5 to 344.8 KPa) is normally operated with catalyst and hydrocarbon feed flowing concurrently into and upward into the riser at about the same velocity, thereby avoiding any significant slippage of catalyst relative to hydrocarbon in the riser and avoiding formation of the catalyst bed in the reaction flowstream.

The catalyst containing the metal contaminants and the carbon is separated from the hydrocarbon product stream as it is withdrawn from the reactor. The catalyst is passed to the regenerator. In the regenerator, the catalyst is heated to a temperature in the range of about 800° to about 1800°F (427° to 982°C), preferably 1150° to 1400°F (621° to 760°C) for a period of time ranging from three to thirty minutes in the presence of an oxygen-containing gas. This burning step is conducted to reduce the concentration of the carbon on the catalyst to less than 0.3 weight percent by conversion of the carbon to carbon monoxide and carbon dioxide.

The following Examples are presented to illustrate objectives and advantages of the invention.

## Example 1

The formation of various metal vanadates from vanadium pentoxide and other metal oxides and carbonates was accomplished by preparing stoichiometric mixtures and heating for two hours in air at 700°C. The products were cooled and examined for compound formation by x-ray powder diffraction. The reactions are listed below:

$MO + V_2O_5 \rightarrow MV_2O_6$
$2MO + V_2O_5 \rightarrow M_2C_2O_7$
$3MO + V_2O_5 \rightarrow M_3V_2O_8$
$MCO_3 + V_2O_5 \rightarrow MV_2O_6 + CO_2$
$2MCO_3 + V_2O_5 \rightarrow M_2C_2O_7 + 2CO_2$
$3MCO_3 + V_2O_5 \rightarrow M_3V_2O_8 + 3CO_2$
M = Mg, Ca, Sr, Ba, Zn, Cd.

All of the monometal and dimetal vanadates were formed from stoichiometric mixtures at temperatures typical of an FCCU regenerator. The trimetal vanadates did not form as easily. Trimagnesium vanadate did not form at all, while tri-barium vanadate formed cleanly. The other Group II metals provided mixtures of $M_2V_2O_7$ and $M_3V_2O_8$.

The relative reactivities of the Group II metals were evaluated with a competitive reaction experiment to determine whether the trapping compound or the zeolite had greater reactivity with vanadium. The zeolite, trapping agent and vanadium pentoxide were mixed together prior to being heated for two hours in air at 700°C. The zeolite comprised 50% of the mixture; the remaining 50% was trapping agent and vanadium pentoxide. The Group II metal-to-vanadium molar ratio was maintained at 2.0. The starting material and final product were compared using x-ray powder diffraction. The line intensities were used to determine the percentage crystallinity that remained after thermal treatment.

The results are summarized in Table 1. Of the alkaline earth elements, no crystallinity was retained with magnesium oxide or barium carbonate trapping agents. Strontium carbonate showed the most favorable results with 50% crystallinity retention. Calcium oxide showed some crystallinity retention but not as much as the strontium. Of the Group IIb elements, zinc oxide showed the best results with 40% crystallinity retention whereas cadmium oxide showed limited effectiveness with 5% zeolite intensity remaining after thermal treatment.

TABLE 1

Vanadium Trapping Effectiveness or Group II Metals

| Trapping Agent | % Zeolite Crystallinity |
|---|---|
| MgO | 0 |
| CaO | 20 |
| SrCO3 | 50 |
| BaCO3 | 0 |
| ZnO | 40 |
| CdO | 5 |

o Mixture: 50% Zeolite
50% Trapping Agent + $V_2O_5$ (Metal/Vanadium = 2.0)
o Conditions: 2 hr at 700°C in air.

## Example 2

Preparation of Ammonium Exchanged 3A Matrix

Amorphous silica-alumina gel was obtained from Davison Chemical Company as MS-25 wet cake. This gel is a high solids suspension that would normally be fed to a spray dryer. The alumina content in the silica-alumina was a nominal 25%. The suspension was filtered to produce wet 3A gel. This material was subsequently ion exchanged with ammonium sulfate and washed with distilled water to reduce the sodium content below 0.1% in the dried gel.

The procedure for exchanging the gel was to slurry 2500 g of raw gel with 2 l of 5% $(NH_4)_2SO_4$ solution in a large blender. The slurry was poured into a vacuum filter to pull the liquid through the filter paper. An additional 8 l of ammonium sulfate solution was added to the slurry to increase the wash volume. The slurry was filtered until a gel cake formed on the filter paper and cracked. Filtering typically required all day

or overnight. The ammonium sulfate exchange was repeated a second time using the product gel cake from the first exchange and a total of 10 l of salt solution. After the ammonium ion exchange steps, the product was washed twice with distilled water. Again the gel cake was first slurried in a blender using 2 l of water this time. A total volume of 10 l of distilled water was used in each wash step.

The exchanged and washed 3A gel was stored in a plastic bag within a closed bucket until needed. Typical weight loss on drying 3A gel is 88%.

Preparation of Zeolite Promoters

The ultrastable Y-zeolite used in the catalyst preparation was Union Carbide LZ-Y82. It was used as received. The lanthanum exchanged Y-zeolite was prepared from Union Carbide LZ-Y52, a synthesized sodium Y-zeolite. The proportions used for exchange were 40 g of $LaCl_3$, 60 g of LZ-Y52 zeolite and 600 g of water. A slurry was prepared at 60°C and maintained for 1 hour. The product was filtered and washed with 2 l of distilled water. A second exchange followed the same procedure using the filtered product of the first exchange. After two exchanges the zeolite was dried at 110°C in a forced air oven and subsequently calcined for 1 hr at 400°C. After calcining, a final lanthanum chloride exchange was made using 40 g of $LaCl_3$ in 600 g of water at 60°C. After filtering and washing, the product was dried at 110°C and stored for subsequent use.

Preparation of Catalyst in 3A Matrix

The catalyst was prepared by stirring the dry components into 3A gel. Preparations of gel, zeolite and catalyst additives were weighed out to give the desired proportions on a dry basis. Weight loss data were determined by heating gel or zeolite to 875°C in inert gas, typically argon or nitrogen. Weight loss measurements were not made on vanadium trapping agents since some would decompose at high temperatures. These additives were assumed to be water free. The dry components were stirred into the damp 3A gel with a tablespoon. If the gel became particularly stiff, small quantities of distilled water were added to facilitate stirring. After the components were mixed together, the wet gel was dried overnight at 110°C in a forced air oven and subsequently ground with an agate mortar and pestle to obtain a fine powder.

Impregnation with Vanadium Compounds

Samples with vanadium were prepared by incipient wetness impregnation using vanadyl acetylacetonate in methanol. The vanadyl acetylacetonate has limited solubility: 0.5 g would dissolve in about 100 g of methanol. This required multiple impregnations with air drying between steps. After impregnation and drying was completed, the sample was calcined in air for 2 hr at 425°C to decompose the acetylacetonate; finally the sample was steamed for 16 hr at 730°C to simulate hydrothermal conditions in an FCCU.

Example 3

Ultrastable Y Catalyst

The ultrastable Y catalysts produced in Example 2 (with and without vanadium inclusion) were then tested. The ASTM microactivity test (MAT or ASTM D-3907-80) was used to evaluate catalyst activity and selectivity. The feed was an ASTM standard vacuum gas oil as described below:

AMOCO OIL NO. FCC 893

FEED CHARACTERIZATION OF D-32 ASTM STANDARD MAT FEED

Distillation Data

| Vol | ASTM D-1160 Temp, °F (°C) | 760 mm TBP Temp, °F (°C) |
|---|---|---|
| IBP | 179 (81.7) | 388 (158.0) |
| 5 | 287 (141.7) | 504 (262.9) |
| 10 | 330 (165.6) | 574 (301.4) |
| 20 | 374 (184.7) | 632 (333.5) |
| 30 | 412 (210.7) | 682 (361.4) |
| 40 | 444 (229.2) | 726 (383.3) |
| 50 | 479 (248.5) | 773 (411.9) |
| 60 | 518 (270.0) | 821 (438.3) |
| 70 | 558 (292.1) | 870 (465.6) |
| 80 | 603 (316.6) | 925 (496.1) |
| 90 | 657 (346.8) | 991 (532.5) |
| 95 | 694 (376.6) | 1025 (551.5) |
| FBP | 714 (379.5) | 1061 (571.6) |

| | |
|---|---|
| Pour Point, °F (°C) | 80 (26.7) |
| Gravity, °API | 27.6 |
| Vol ABP, °F (°C) | 778 (414.4) |
| Total Nitrogen, ppm | 875 |
| Basic Nitrogen, ppm | 281 |
| Sulfur, Wt% | 0.64 |
| Conradson Carbon, Wt% | 0.18 |
| Ramsbottom Carbon, Wt% | 0.21 |
| Refractive Index | 1.4772 at 67°C |
| Aniline Point, °F (°C) | 182 (83.3) |
| Viscosity, CS+ | 4.42 at 210°F (98.9°C) |
| UOPK | 12.02 |

Prior to MAT evaluation, the catalysts were steamed 16 hours at 730°C to simulate the hydrothermal aging that occurs in a commercial FCCU.

The effect of adding strontium carbonate to ultrastable Y-zeolite in silica-alumina (3A) matrix is presented in Table 2. A catalyst with 15% zeolite provided a MAT conversion of 69.8% with hydrogen and coke yields of 0.06 and 2.73%, respectively. Replacing 10% of the 3A matrix with strontium carbonate had no effect on MAT activity or hydrogen yield but produced a slight decrease in coke make. Hence, replacing a small amount of matrix material with strontium carbonate had a negligible effect on catalyst performance. These same catalysts loaded with 5000 ppm vanadium (experimental procedure in Example 2) showed the benefits of strontium carbonate for deactivating vanadium. The base catalyst with vanadium produced 0.72% hydrogen and 5.78% coke. Vanadium increased hydrogen make by a factor of 12 and coke by a factor of 2. However, the vanadium doped USY catalyst with strontium carbonate made considerably less hydrogen and less coke than the unprotected base. The strontium trap substantially reduced hydrogen production and reduced coke by a factor of about 2.

TABLE 2

Strontium Carbonate Mitigates Hydrogen and Coke Formation

| | % V | MAT | $H_2$ | COKE |
|---|---|---|---|---|
| 15% U.S. H-Y in 3A MATRIX | 0 | 69.8 | 0.06 | 2.73 |
| 10% $SrCO_3$ ADDED | 0 | 70.7 | 0.05 | 2.45 |
| 15% U.S. H-Y in 3A MATRIX | 0.5 | 61.9 | 0.72 | 5.78 |
| 10% $SrCO_3$ ADDED | 0.5 | 59.8 | 0.38 | 3.39 |

Rare-earth-exchanged Y Catalyst

Rare earth exchanged Y-zeolites are much more active than ammonium exchanged US Y. The more active zeolite reduces the contribution of the 3A matrix on the cracking activity and accentuates the role of the zeolite. Data on lanthanum Y-zeolite in 3A matrix are provided in Table 3. The catalyst with lanthanum Y-zeolite produced a MAT activity of 83.0. Adding 10% strontium carbonate in place of an equivalent amount of matrix lowered the MAT activity to 77.0. The catalyst with strontium carbonate had a lower coke yield than the base; since conversion and coke yield typically increase and decrease together when no metals are present, this behavior is expected.

Vanadium addition to both samples distinguished the material containing the trapping agent. The catalyst with strontium carbonate had higher activity, lower hydrogen yield and less coke than base-case La-Y catalyst. The base case catalyst lost 16% conversion when 5000 ppm vanadium was added. The catalyst with strontium carbonate started at a lower value but lost only 3% conversion. The catalyst with the vanadium trap also made less coke, but most importantly, this was less coke at higher conversion. Hence, strontium carbonate particles blended into the catalyst matrix had a favorable effect on both activity and selectivity in a high vanadium environment.

TABLE 3

Strontium Carbonate Also Effective With Rare Earth Y-Zeolites

| | % V | MAT | $H_2$ | COKE |
|---|---|---|---|---|
| 17.6% La-Y in 3A MATRIX | 0 | 83.0 | 0.03 | 5.25 |
| 10% $SrCO_3$ ADDED | 0 | 77.0 | 0.02 | 4.35 |
| 15.6% La-Y in 3A MATRIX | 0.5 | 67.0 | 0.55 | 6.29 |
| 10% $SrCO_3$ ADDED | 0.5 | 74.0 | 0.13 | 4.00 |

Example 4

A cracking catalyst containing an effective amount of a poisonous metal getter was produced by physically mixing a conventional commercial cracking catalyst with the trapping material.

An amount of alumina was mixed with strontium hydroxide in an amount sufficient to give (upon treatment with carbon dioxide) a resulting matrix having 10% by weight $SrCO_3$. The mixture was treated with $CO_2$ to convert the Sr(OH).

The alumina/strontium carbonate mixture was then combined in a 1:2 ratio with a commercial cracking catalyst (Davison RC-30). The effects of vanadium poisoning were assessed as in the above examples. As was the case in those examples, the strontium-containing catalyst provided improved hydrogen and coke production (when innoculated with vanadium) over the neat catalyst/alumina mixture.

TABLE 4

1:2 Mixture of $SrCO_3$ on Alumina with Cracking Catalyst Reduces Effects of Vanadium Poisoning

| Trapping Agent | Catalyst | % V | MAT | $H_2$ | Coke |
|---|---|---|---|---|---|
| $Al_2O_3$ | RC-30 | 0.0 | 79.4 | 0.04 | 5.69 |
| 10% $SrCO_3$ on $Al_2O_3$ | RC-30 | 0.0 | 80.1 | 0.03 | 5.34 |
| $Al_2O_3$ | RC-30 | 0.5 | 69.3 | 0.56 | 7.35 |
| 10% $SrCO_3$ on $Al_2O_3$ | RC-30 | 0.5 | 76.0 | 0.40 | 6.86 |

Example 5

(Comparative Data)

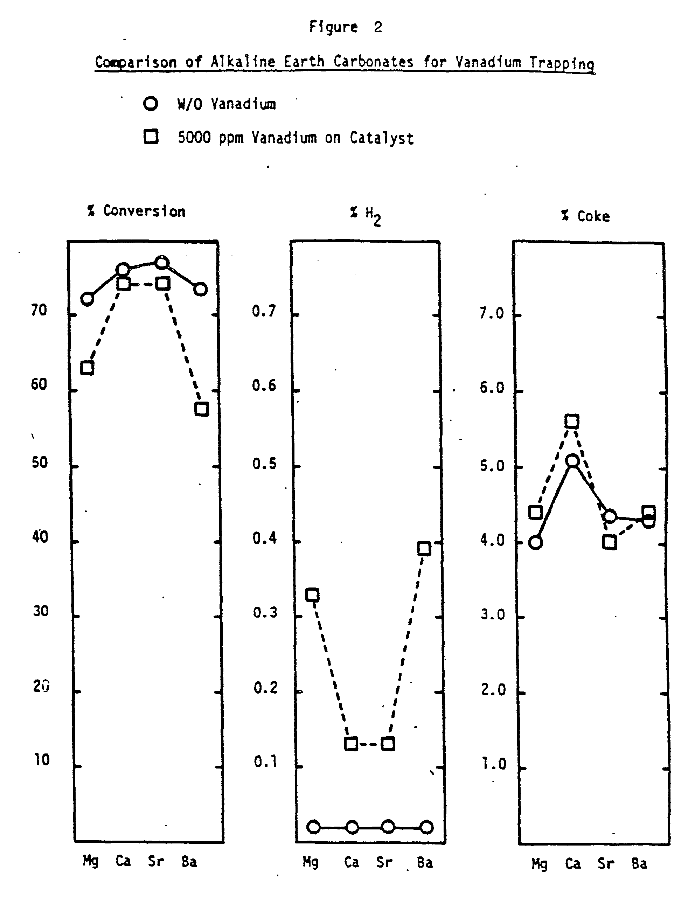

The initial survey (shown in Table 1) of the reactivity of alkaline earth elements as vanadium trapping agents indicated that calcium was also effective in protecting zeolite crystallinity but that magnesium and barium were not. Four alkaline earth carbonates were tested for vanadium trapping in cracking catalyst. As with the strontium experiment, 10% of the metal carbonates were blended into a 3A silica-alumina matrix along with 17.6% La-Y zeolite. Data on MAT activity, hydrogen make and coke yield are presented in Figure 2. The circles connected by solid lines are data obtained using catalyst without metals.

The data points marked by squares and connected with dashed lines are for catalyst doped with 5000 ppm vanadium.

A comparison of cracking catalysts containing alkaline earth carbonates shows slight activity advantages with calcium and strontium carbonate over magnesium and barium when those catalysts are compared in the absence of the metal poisons. There is no difference in "no-metals" hydrogen make, but some variation in "no-metals" coke make. Magnesium carbonate was the best from the coke producing standpoint, catalysts containing strontium and barium carbonates were close seconds and the catalyst containing calcium was the worst. The performance of these same catalysts was vastly different when vanadium is added. As the x-ray powder diffraction data had indicated, magnesium and barium perform poorly at accumulating vanadium. Catalysts containing magnesium or barium compounds had low activities; the hydrogen production is high and coke production (although similar to "no-metals" values) is high for the activity.

By comparison, catalysts containing calcium and strontium carbonates perform well. The MAT activities and hydrogen yields are equivalent. However, the two additives are distinguished by coke production. The catalyst containing calcium carbonate has a much higher coke yield than the catalyst with strontium. This shows the principal advantage of strontium. The low coke at high poison metals content is an attractive feature for a catalyst used in units that are often coke-burn or regenerator throughput limited.

Example 6

(Comparative Data)

The initial survey of Group II metals as vanadium traps showed potential for zinc. Although zinc oxide reacted rapidly with vanadium pentoxide, it did not perform well in a cracking catalyst. Table 5 shows MAT evaluation data for zinc oxide in 3A matrix alone. Adding zinc to the matrix lowered its activity and increased hydrogen make. The same type of difficulty was observed when US Y zeolite was included in the catalyst. The zinc oxide additive significantly increased the hydrogen and coke yield at constant activity without vanadium being present. Since zinc produced the same deleterious symptoms as does vanadium, it is not an effective vanadium trapping agent.

TABLE 5

Zinc Oxide Alone Increases Hydrogen and Coke

| | MAT | $H_2$ | COKE |
|---|---|---|---|
| 3A MATRIX | 56.2 | 0.04 | 2.06 |
| 10% ZnO in 3A MATRIX | 44.0 | 0.21 | 1.90 |
| 15% U.S. H-Y in 3A MATRIX | 69.8 | 0.06 | 2.73 |
| 10% ZnO ADDED | 69.7 | 0.37 | 3.82 |

**Claims**

1. A catalytic cracking catalyst comprising:
an aluminosilicate zeolitic material;
a matrix material selected from (a) one or more material mineral clays selected from kaolin, halloysite, and montmorillonite and (b) an inorganic oxide selected from silica, alumina, silica-alumina, silica-zirconia, silica-magnesia, alumina-boria or alumina-titania; and
a particulate substantially water insoluble strontium-containing material dispersed in the matrix which forms a high melting product with a metal poison of vanadium- or nickel-containing components or mixtures when subjected to fluid catalytic cracking regenerator temperatures and which strontium-containing material is selected from strontium carbonate, strontium silicate, and strontium aluminate.

2. A catalyst according to claim 1 wherein the zeolitic material is selected from faujasite, Type Y and high silica Type Y.

3. A catalyst according to claim 1 or claim 2 wherein the zeolitic material is at least partially exchanged with one or more of lanthanum, cerium, neodymium, or praesodymium.

4. A catalytic cracking composition comprising a catalyst according to any one of claims 1 to 3 composited with catalytically-inert material having substantially no catalytic activity or less catalytic activity than the said inorganic oxide component or the clay component.

5. A composition as in claim 4 wherein the inert component is a pre-formed absorptive bulk material in a physical form having stabilized surface area and pore structure.

6. A composition as in claim 4 or claim 5 wherein the inert component is selected from silica, alumina, titania, zirconia, magnesia and mixtures thereof, mullite, low surface-area clays.

7. A composition as in any one of claims 4 to 6 wherein the inert component is present in an amount in the range of from 10 to 35 weight percent based on the weight of the composition.

8. A composition as in any one of claims 4 to 7 comprising filler and/or binder component(s).

9. A process for the conversion of a hydrocarbon oil having a significant concentration of at least one metal poison selected from vanadium or nickel to lighter oil products comprising contacting said hydrocarbon oil at conversion conditions with either a catalytic cracking catalyst according to any one of claims 1 to 3 or a catalytic cracking composition according to any one of claims 4 to 8.

**Patentansprüche**

1. Katalytischer Crackkatalysator enthaltend:
ein zeolithisches Aluminosilikatmaterial,
ein Matrixmaterial ausgewählt aus (a) einem oder mehreren Mineraltonen ausgewählt aus Kaolin, Halloysit und Montmorillonit und (b) einem anorganischen Oxid ausgewählt aus Siliciumdioxid, Aluminiumoxid, Siliciumdioxid-Aluminiumoxid, Siliciumdioxid-Zirkonoxid, Siliciumdioxid-Magnesiumoxid, Aluminiumoxid-Boroxid oder Aluminiumoxid-Titandioxid und
ein teilchenförmiges, im wesentlichen wasserunlösliches, Strontium enthaltendes, in der Matrix verteiltes Material, das mit einem Metallgift aus Vanadin oder Nickel enthaltenden Komponenten oder Mischungen ein hochschmelzendes Produkt bildet, wenn es den Temperaturen im Regenerator beim katalytischen Fließcracken ausgesetzt wird, wobei das Strontium enthaltende Material ausgewählt ist aus Strontiumcarbonat, Strontiumsilikat und Strontiumaluminat.

2. Katalysator nach Anspruch 1, bei dem das zeolithische Material ausgewählt ist aus Faujasit, Typ Y und Typ Y mit hohem Siliciumdioxidgehalt.

3. Katalysator nach Anspruch 1 oder 2, bei dem das zeolithische Material zumindest teilweise mit Lanthan, Cer, Neodym und/oder Praseodym ausgetauscht ist.

4. Katalytische Crackzusammensetzung, die einen Katalysator nach einem der Ansprüche 1 bis 3 im

Verbund mit katalytisch inertem Material umfaßt, das im wesentlichen keine katalytische Aktivität oder eine geringere katalytische Aktivität als die anorganische Oxidkomponente oder die Tonkomponente besitzt.

5. Zusammensetzung nach Anspruch 4, bei der die inerte Komponente ein vorgeformtes absorbierendes Material in einer körperlichen Form mit stabilisierter Oberfläche und Porenstruktur ist.

6. Zusammensetzung nach Anspruch 4 oder 5, bei der die inerte Komponente ausgewählt ist aus Siliciumdioxid, Aluminiumoxid, Titandioxid, Zirkonoxid, Magnesiumoxid und Mischungen derselben, Mullit und Tonen mit geringer Oberfläche.

7. Zusammensetzung nach einem der Ansprüche 4 bis 6, bei der die inerte Komponente in einer Menge im Bereich von 10 bis 35 Gew.% bezogen auf das Gewicht der Zusammensetzung vorhanden ist.

8. Zusammensetzung nach einem der Ansprüche 4 bis 7, die Füllstoff- und/oder Bindemittelkomponenten enthält.

9. Verfahren zur Umwandlung eines Kohlenwasserstofföls mit einer signifikanten Konzentration mindestens eines Metallgiftes ausgewählt aus Vanadin und Nickel in leichtere Ölprodukte, bei dem das Kohlenwasserstofföl bei Umwandlungsbedingungen entweder mit einem katalytischen Crackkatalysator nach einem der Ansprüchen 1 bis 3 oder einer katalytischen Crackzusammensetzung nach einem der Ansprüche 4 bis 8 kontaktiert wird.

**Revendications**

1. Un catalyseur de craquage catalytique comportant:
un matériau zéolitique en aluminosilicate;
un matériau matriciel choisi parmi
a) un ou plus d'un produit argile minérale choisi parmi le kaolin, l'halloysite et la montmorillonite et
b) un oxyde minéral choisi parmi la silice, l'alumine, la silice-alumine, la silica-zircone, la silice-magnésie, l'alumine-oxyde bore ou l'alumine dioxide de titane; et
un matériau particulaire pratiquement insoluble dans l'eau, renfermant du strontium, dispersé dans la matrice, qui forme un produit à point de fusion élevée avec un poison métallique de composants ou de mélanges renfermant du vanadium ou du nickel lorsque on le soumet à des températures de régénérateur de craquage catalytique fluidisé, ce matériau renfermant du strontium étant choisi parmi le carbonate de strontium, le silicate de strontium et l'aluminate de strontium.

2. Un catalyseur selon la revendication 1, dans lequel le matériau zéolitique est choisi parmi la faujasite, le Type Y à silice élevée et le Type Y.

3. Un catalyseur selon la revendication 1 ou la revendication 2, dans lequel le matériau zéolitique est au moins partiellement échangé avec un ou plus d'un lanthane, cérium, néodyme ou praséodyme.

4. Une composition de craquage catalytique comportant un catalyseur selon l'une quelconque des revendications 1 à 3, conditionnée avec un matériau catalytiquement inerte présentant pratiquement pas d'activité catalytique ou moins d'activité catalytique que ledit composant d'oxyde minéral ou ledit composant argileux.

5. Une composition comme dans la revendication 4, dans laquelle le composant inerte est un matiériau pré-formé absorbant en vrac sous une forme physique présentant une surface spécifique et une structure des pores stabilisée.

6. Une composition comme dans la revendication 4 ou la revendication 5, dans laquelle le composant inerte est choisi parmi la silice, l'alumine, le dioxide de titane, la zircone, la magnésie et leurs mélanges, la mullite, les argiles à faible surface spécifique.

7. Une composition comme dans l'une quelconque des revendications 4 à 6, dans laquelle le composant inerte est présent en une quantité dans la plage de 10 à 35% en poids en se basant sur le poids de la composition.

8. Une composition comme dans l'une quelconque des revendications 4 à 7 comportant des charges et/ou des liants constitutifs.

9. Un procédé pour la conversion d'une huile d'hydrocarbures présentant une concentration significative d'au moins un poison métallique choisi parmi le vanadium et le nickel, en produits huileux plus légers, consistant à mettre en contact ladite huile d'hydrocarbures sous des conditions de conversion avec un catalyseur de craquage catalytique selon l'une quelconque des revendications 1 à 3 ou bien avec une composition de craquage catalytique selon l'une quelconque des revendications 4 à 8.

Figure 1

Fluidized Catalytic Cracking Unit

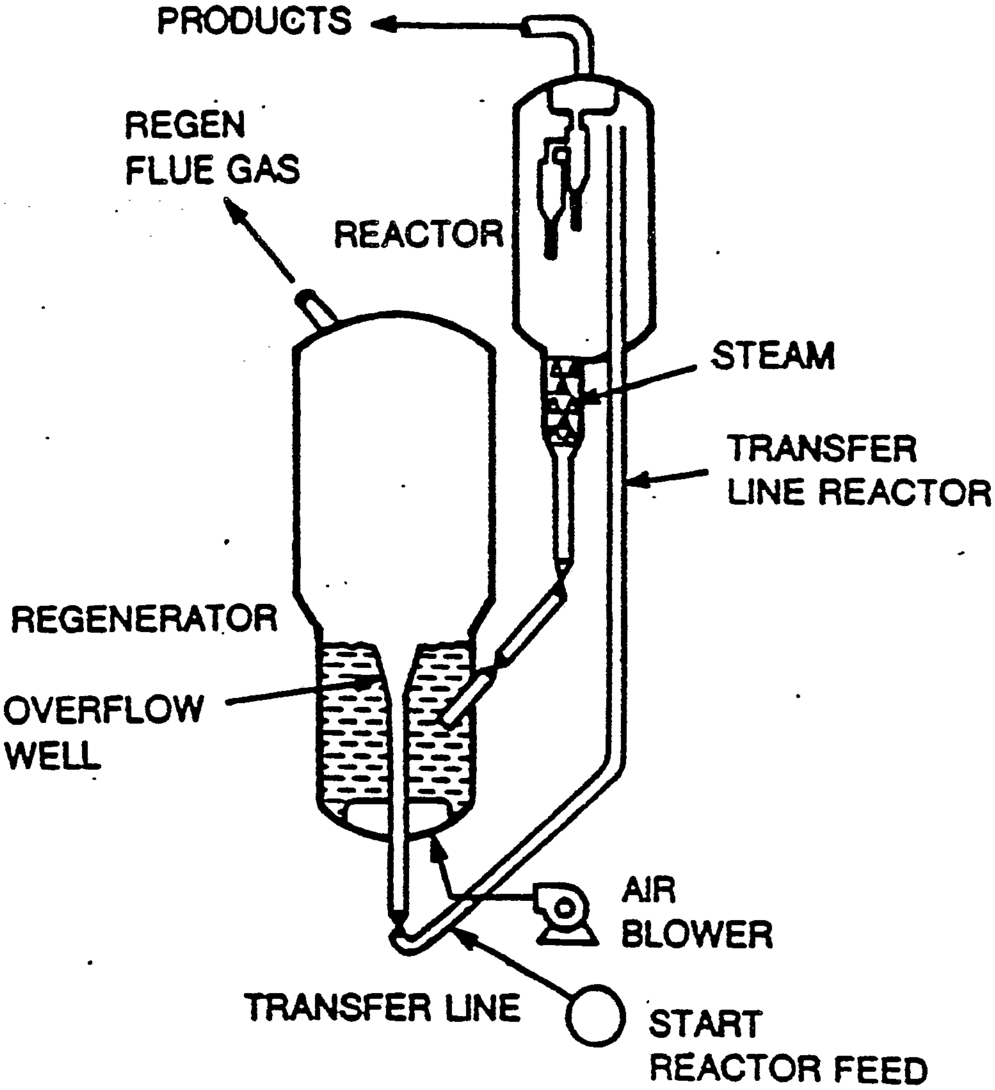

Figure 2

Comparison of Alkaline Earth Carbonates for Vanadium Trapping